# EUROPÄISCHE PATENTSCHRIFT

(11) **EP 3 411 200 B1**
(45) Veröffentlichungstag und Bekanntmachung des Hinweises auf die Patenterteilung: **18.12.2019**
(21) Anmeldenummer: 17703934.4
(22) Anmeldetag: 26.01.2017
(51) Int. Cl.: B25J 19/06, B25J 5/02

(54) **SICHERHEITSEINRICHTUNG UND SICHERHEITSVERFAHREN**
SAFETY DEVICE AND SAFETY METHOD
DISPOSITIF DE SÉCURITÉ ET PROCÉDÉ DE SÉCURITÉ

(30) Priorität: 02.02.2016 DE 202016100505 U
(43) Veröffentlichungstag der Anmeldung: 12.12.2018
(73) Patentinhaber: KUKA Systems GmbH, 86165 Augsburg (DE)
(72) Erfinder: STERZ, Friedrich, 86154 Augsburg (DE); PROSKE, Jürgen, 86356 Neusäß (DE); HONSBERG, Otmar, 82256 Fürstenfeldbruck (DE)
(74) Vertreter: Tillmann, Axel
(86) Internationale Anmeldenummer: PCT/EP2017/051616
(87) Internationale Veröffentlichungsnummer: WO 2017/133958

(56) Entgegenhaltungen:
- WO-A1-2006/117025
- DE-A1-102006 057 843
- DE-A1-102009 051 583
- DE-A1-102014 019 410
- DE-U1-202013 105 504

## Beschreibung

Die Erfindung betrifft eine Sicherheitseinrichtung und ein Sicherheitsverfahren für einen Industrieroboter mit den Merkmalen im Oberbegriff des Verfahrens- und
Die Dokumente WO 2006/117025 A1 und DE 10 2009 051 583 A1 offenbaren eine solche Sicherheitseinrichtung und ein solches Sicherheitsverfahren.

In der Praxis ist es bekannt, mehrachsige und programmierbare Industrieroboter für Fertigungsanlagen, insbesondere im Fahrzeugbau, einzusetzen. Bei Störungen, z.B. auftretender oder drohender Kollisionsgefahr, Stromausfall etc., wird der Industrieroboter sicherheitshalber abgeschaltet.

Es ist Aufgabe der vorliegenden Erfindung, eine verbesserte Sicherheitstechnik aufzuzeigen.

Die Erfindung löst diese Aufgabe mit den Merkmalen im Verfahrens- und Vorrichtungshauptanspruch.

Die beanspruchte Sicherheitstechnik, d.h. die Sicherheitseinrichtung und ein Sicherheitsverfahren, haben verschiedene Vorteile.

Die beanspruchte Sicherheitstechnik erlaubt ein aktives und/oder passives Ausweichen des Industrieroboters in einem Störfall. Ein Störfall kann unterschiedliche Ursachen und Ausprägungen haben. Er kann insbesondere technische Störungen oder Ausfälle und auch das Auftreten einer Gefahrensituation durch menschliches Verhalten umfassen.

Der Industrieroboter ist auf oder an einer Aufnahme angeordnet die um mindestens zwei Bewegungsachsen beweglich und arretierbar ist. Das bedeutet z.B., dass die Aufnahme sich um eine rotatorische Bewegungsachse drehen und entlang einer translatorischen Bewegungsachse bewegen kann.

Die Aufnahme der Sicherheitseinrichtung für den Industrieroboter kann scheiben- oder tellerartig ausgebildet sein. Sie kann auch einen Ausleger aufweisen. Der Industrieroboter kann auf oder an der Scheibe oder dem Teller und/oder am distalen Endbereich des Auslegers montiert sein.

Es kann zwei, drei, vier oder mehr Bewegungsachsen geben. Ferner können die Bewegungsachsen rotatorisch und/oder translatorisch sein und beliebig kombiniert werden. Die Sicherheitstechnik de-arretiert die Aufnahme in einem Störfall und lässt sie zusammen mit dem Industrieroboter ausweichen. Das Ausweichen kann aktiv und/oder passiv erfolgen.

Durch diese Sicherheitstechnik werden einerseits Unfallgefahren für einen Werker minimiert oder ausgeschaltet. Andererseits können insbesondere bei einer aktiven Rückstellbewegung Kollisionen des

Industrieroboters mit Werkstücken oder Vorrichtungen und hieraus resultierende Beschädigungen vermieden oder zumindest minimiert werden. Dies ist insbesondere günstig, wenn der Industrieroboter an einer Fertigungsstraße und bei Prozessen an kontinuierlich oder intermittierend bewegten Werkstücken, z.B. Fahrzeugkarosserien, eingesetzt wird.

Die mehrachsige und kaskadierte Rückstellbewegung ermöglicht eine Vergrößerung der Reichweite und/oder komplexere und ggf. gekrümmte Bewegungsbahnen für die Rückstellung.

Die beanspruchte Sicherheitstechnik erleichtert oder ermöglicht den Einsatz eines Industrieroboters in Kooperation oder Kollaboration mit einem Werker. Die Sicherheitstechnik verhindert z.B. ein Einquetschen des Werkers zwischen dem Industrieroboter und einem stationären oder bewegten Hindernis, insbesondere einem Werkstück. Dies ist besonders vorteilhaft bei einem im technischen Störfall starren Industrieroboter und einem weiterbewegten Werkstück.

Andererseits kann ein Einquetschen bei einem vom Werker ausgelösten Stör- und Gefahrenfall vermieden werden, z.B. bei einem bestimmungswidrigen Eindringen eines Werkers in den Arbeitsbereich des Industrieroboters im Prozessbetrieb. Der Werker kann dank der Sicherheitseinrichtung den Industrieroboter im Störfall wegschieben. Er kann ihn dabei z.B. über eine Rückstellposition hinaus bewegen. Er kann außerdem den Industrieroboter mitsamt der Aufnahme um dessen Bewegungsachse, insbesondere Drehachse, von sich wegbewegen.

Die Aufnahme der Sicherheitseinrichtung kann in der normalen Funktion und in der Arbeitsposition arretiert werden. Hierfür können je nach Zahl der Bewegungsachsen zwei oder mehr Arretierungen vorhanden sein, die im Störfall gelöst werden und Ausweichbewegungen der Aufnahme zusammen mit dem Industrieroboter ermöglichen. Hierbei ist eine Folgeauslösung von Arretierungen vorhanden.

Jede Arretierung kann unterschiedlich ausgebildet sein und kann auch auf verschiedene Weise ausgelöst werden. Die bei einer De-Arretierung erfolgende Ausweichbewegung, insbesondere Rückzugsbewegung, der Aufnahme kann aktiv durch eine Rückstelleinrichtung und/oder passiv durch eine von außen z.B. auf den Industrieroboter wirkende Kraft bewirkt werden.

Eine Arretierung kann z.B. im Störfall durch einen ansteuerbaren Auslöser gelöst werden und eine aktive und/oder passive Rückstellbewegung der Aufnahme in eine Rückstellposition ermöglichen. Durch diese Bewegung wird eine weitere Arretierung für eine weitere, insbesondere passive, Ausweichbewegung der Aufnahme gelöst. Andererseits kann eine z.B. als Rasteinrichtung ausgebildete Arretierung bei Überschreiten einer bevorzugt einstellbaren Belastungsschwelle gelöst werden und eine aktive und/oder passive Ausweichbewegung, insbesondere Rückstellbewegung, ermöglichen.

Eine aktive und/oder passive Rückstellbewegung kann durch eine Rückstellmechanik bewirkt werden, die in beliebig geeigneter Weise ausgebildet sein kann, insbesondere als Schlittenanordnung oder als Schwingenanordnung. Eine passive Ausweichbewegung kann alternativ oder zusätzlich durch eine freie Drehbeweglichkeit der Aufnahme mit samt des Industrieroboters um die Lagerung der Aufnahme, z.B. an der Rückstellmechanik, bewirkt werden.

Eine Rückstellbewegung muss nicht abgeschlossen sein, um eine weitere Arretierung für eine weitere, insbesondere passive Ausweichbewegung der Aufnahme zu lösen. Die weitere Arretierung kann z.B. bereits nach einer geringfügigen Teilstrecke der Rückstellbewegung gelöst werden.

Die Sicherheitstechnik kann auf unterschiedliche Arten von Störfällen jeweils angemessen reagieren. Bei einem Stromausfall kann ein stromabhängiger Auslöser die Arretierung einer Rückstellmechanik automatisch lösen, wobei ein redundanter bzw. latenter Energiespeicher die Rückstellenergie liefert und ein Aktor die Rückstellmechanik bewegt und antreibt. In einem anderen Störfall kann der besagte Auslöser bedarfsweise geschaltet werden und die zugehörige Arretierung lösen. Dieses Schalten kann von einer Steuerung nach Empfang und Auswertung eines Störsignals veranlasst werden. Eine andere Arretierung, insbesondere Rasteinrichtung, kann durch äußere Krafteinwirkung gelöst werden, wobei diese Kraft auch die Ausweichbewegung bewirkt.

Die Sicherheitstechnik erlaubt in einer bevorzugten Ausführung ein Ausweichen der Aufnahme mit dem darauf angeordneten Industrieroboter in eine definierte Rückstellposition, die für normale Störfälle genügt. Falls dies in besonderen Situationen noch nicht ausreichen sollte, kann die Rückstellposition bedarfsweise überfahren werden, insbesondere durch äußere Krafteinwirkung, z.B. durch einen Werker. Das Überfahren kann durch einen Notschalter detektiert werden und eine weitergehende Sicherheitsmaßnahme auslösen, z.B. ein Abschalten der Fertigungsstraße oder auch der Fertigungsanlage.

In den Unteransprüchen sind weitere vorteilhafte Ausgestaltungen der Erfindung angegeben.

Die Sicherheitseinrichtung und das Sicherheitsverfahren sowie die Prozesseinrichtung können auch die nachstehenden Ausgestaltungsmerkmale jeweils einzeln oder in beliebig geeigneter Kombination aufweisen.

Die de-arretierte Aufnahme der Sicherheitseinrichtung ist auf äußere Krafteinwirkung passiv ausweichbar oder kann auf äußere Krafteinwirkung passiv ausweichen.

Eine Arretierung einer Aufnahme der Sicherheitseinrichtung kann vorgespannt sein.

Ein Kraftspeicher einer aktiven Rückstelleinrichtung kann als Feder, insbesondere als gedämpfte Feder, bevorzugt als Gasfeder, ausgebildet sein.

Bei einer Prozesseinrichtung mit einem Industrieroboter nebst Prozesswerkzeug und einer Sicherheitseinrichtung kann die Sicherheitseinrichtung mit dem Industrieroboter an einem Transportmittel, insbesondere einem mobilen Transportwagen oder einer stationären Zustellvorrichtung, angeordnet sein.

Bei einer Prozesseinrichtung mit einem Industrieroboter nebst Prozesswerkzeug und einer Sicherheitseinrichtung kann die Sicherheitseinrichtung mit dem Industrieroboter verstellbar an der Prozesseinrichtung, insbesondere an einem Transportmittel, angeordnet sein.

Die Erfindung ist in den Zeichnungen beispielhaft und schematisch dargestellt. Im Einzelnen zeigen:
- Figur 1:: eine Sicherheitseinrichtung mit einer Rückstelleinrichtung und einem Industrieroboter in perspektivischer Darstellung,
- Figur 2:: die Sicherheitseinrichtung von Figur 1 ohne den Industrieroboter,
- Figur 3 bis 5:: die Sicherheitseinrichtung von Figur 1 und 2 in Draufsicht, einem Schnitt gemäß Schnittlinie IV-IV und einer geklappten Unteransicht,
- Figur 6 bis 9:: die Sicherheitseinrichtung von Figur 1 bis 5 in verschiedenen Betriebsstellungen und jeweils in Draufsicht und Unteransicht,
- Figur 10:: eine Roboteranordnung mit einem Transportmittel, einem Industrieroboter und einer Sicherheitseinrichtung in perspektivischer Ansicht,
- Figur 11:: die Roboteranordnung von Figur 10 ohne den Industrieroboter,
- Figur 12:: eine Variante der Sicherheitseinrichtung von Figur 1 bis 9 in Draufsicht,
- Figur 13 bis 15:: Längsschnitte der Sicherheitseinrichtung von Figur 12 gemäß Schnittlinien XIII-XIII, XIV-XIV und XV-XV,
- Figur 16 bis 18:: die Sicherheitseinrichtung von Figur 12 in verschiedenen Betriebsstellungen und jeweils in Draufsicht,
- Figur 19:: eine Variante der Sicherheitseinrichtung und des Transportmittels und
- Figur 20:: eine Variante der Sicherheitseinrichtung mit einem Ausleger.

Die Erfindung betrifft eine Sicherheitseinrichtung (1) und ein Sicherheitsverfahren für einen Industrieroboter (2). Die Erfindung betrifft ferner eine Prozesseinrichtung (27) mit einer Sicherheitseinrichtung (1).

Die Sicherheitseinrichtung (1) ist eine eigenständig herstellbare und handelbare Vorrichtung. Der Industrieroboter (2) kann von einem Betreiber der Sicherheitseinrichtung (1) beigestellt werden. Die Sicherheitseinrichtung (1) kann alternativ einen Industrieroboter (2) beinhalten.

Die Sicherheitseinrichtung (1) kann auch eine oder mehrere weitere Komponenten aufweisen, z.B. ein Transportmittel (24) für den Industrieroboter (2). Sie kann mit einem Industrieroboter (2) nebst Prozesswerkzeug und ggf. mit einer oder mehreren weiteren Komponenten eine Prozesseinrichtung (27) bilden. Ein Industrieroboter (2) kann in den verschiedenen Fällen mehrfach vorhanden sein.

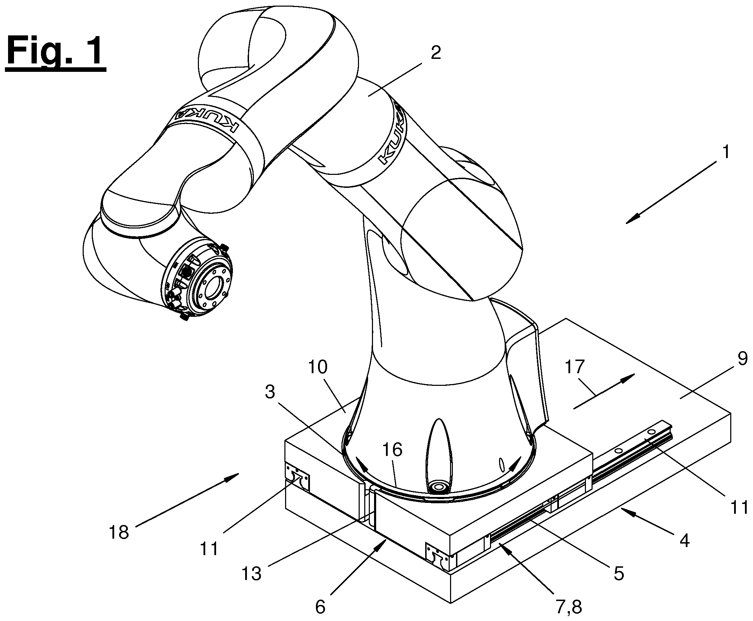

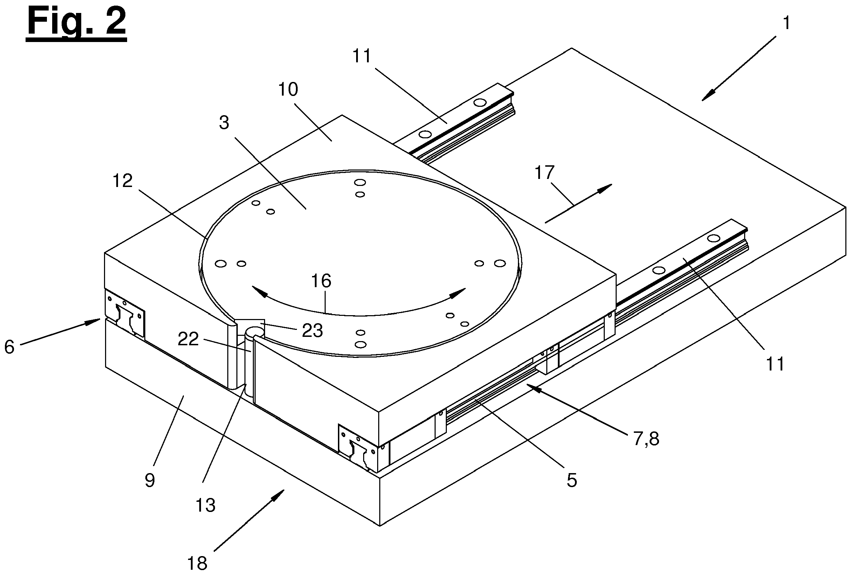

Die Sicherheitseinrichtung (1) kann in unterschiedlicher Weise ausgebildet sein. Figur 1 bis 9 und Figur 10 bis 18 zeigen verschiedene Ausführungsbeispiele.

Die Sicherheitseinrichtung (1) kann automatisch funktionieren. Sie ermöglicht im Störfall ein Ausweichen des Industrieroboters (2). Das Ausweichen kann aktiv und/oder passiv erfolgen.

Die Sicherheitseinrichtung (1) weist gemäß Figur 1, 2 und 12 eine Aufnahme (3) für den Industrieroboter (2) auf. Die Aufnahme (3) kann einzeln oder mehrfach vorhanden sein.

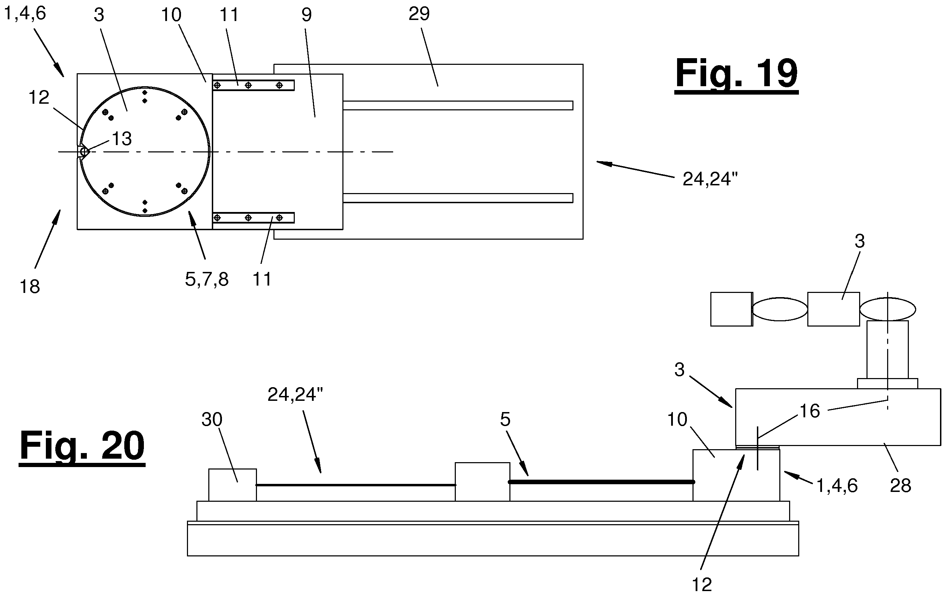

Sie ist z.B. scheiben- oder tellerartig ausgebildet. Sie kann alternativ eine andere konstruktive Ausbildung haben. Die Aufnahme (3) kann gemäß Figur 20 auch einen Ausleger (28) aufweisen.

Die Aufnahme (3) ist um eine rotatorische Bewegungachse (16) und eine translatorische Bewegungsachse (17) beweglich und arretierbar. Die Beweglichkeit und Arretierbarkeit ist um zwei, drei oder mehr, Bewegungsachsen (16,17) gegeben.

Der Industrieroboter (2) ist in beliebig geeigneter Weise an oder auf der Aufnahme (3) angeordnet. In den Ausführungsbeispielen von Figur 1 bis 18 steht der Industrieroboter (2) auf der scheiben- oder tellerartigen Aufnahme (3), die hierfür an der Oberseite eine Montage-Oberfläche aufweist. Eine Bewegungsachse (16) kann sich z.B. zentrisch durch den Industrieroboter (2) erstrecken.

In der Variante von Figur 20 ist der Industrieroboter (2) mit seiner Basis auf dem z.B. balkenartigen Ausleger (28) an dessen einem distalen Endbereich montiert, wobei der Ausleger (28) seinerseits am anderen Endbereich um eine oder mehrere Bewegungsachsen (16,17) beweglich ist. Der Industrieroboter (2) ist dabei mit seitlicher Distanz von der/den Bewegungsachse(n) (16,17) angeordnet.

In Abwandlung der gezeigten Varianten ist auch eine hängende oder seitliche Anordnung eines Industrieroboter (2) an einer nach unten oder zur Seite gerichteten Aufnahme (3) möglich.

Der Industrieroboter (2) kann z.B. fest oder lösbar an oder auf der Aufnahme (3) montiert sein. Im Betrieb besteht eine feste Verbindung zwischen der Aufnahme (3) und dem Industrieroboter (2). Die arretierte und somit von der Sicherheitseinrichtung (1) ortsfest gehaltene Aufnahme (3) positioniert den Industrieroboter (2) in einer vorgegebenen Position, z.B. einer Arbeitsposition (18), in welcher der Industrieroboter (2) durch Bewegung seiner Roboterglieder seine Funktionen und einen Prozess ausführen kann. Figur 1, 10, und 20 zeigen diese Stellung.

Die Sicherheitseinrichtung (1) und der beigestellte oder zugehörige Industrieroboter (2) können in einer automatisierten Prozessumgebung, z.B. zur Handhabung und/oder Bearbeitung von Werkstücken (nicht dargestellt), eingesetzt werden. Die Werkstücke können mittels einer Fördereinrichtung während oder nach dem Prozess bewegt werden, z.B. in einer Fertigungsstrasse.

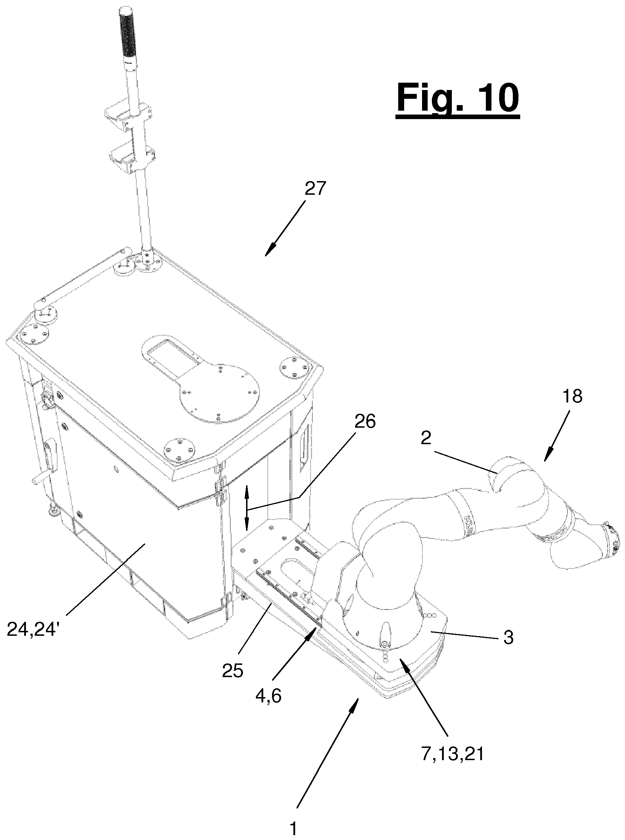

Der in Figur 1 und 10 beispielhaft dargestellte Industrieroboter (2) weist mehrere Roboterglieder und mehrere rotatorische und/oder translatorische Bewegungsachsen und Achsantriebe in beliebiger Zahl und Kombination auf. Er hat z.B. sieben rotatorische Bewegungsachsen. Der Industrieroboter (2) ist mit seiner Basis an oder auf der Aufnahme (3) montiert.

Der Industrieroboter (2) ist programmierbar und ist mit einer Robotersteuerung (nicht dargestellt) verbunden. Der Industrieroboter (2) kann positionsgesteuert und/oder kraftgesteuert sein. Er kann insbesondere als taktiler Roboter mit sensitiven Eigenschaften ausgebildet sein und kann eine zugeordnete, vorzugsweise in die Roboterachsen integrierte, Sensorik aufweisen, welche von außen einwirkende Belastungen, insbesondere Momente, aufnimmt. Der taktile Industrieroboter (2) kann bei einer Mensch-Roboter-Kooperation oder -Kollaboration (MRK) eingesetzt werden.

Der Industrieroboter (2) trägt an seinem z.B. drehenden Abtriebselement ein Prozesswerkzeug (nicht dargestellt), welches in beliebig geeigneter Weise ausgebildet sein kann. Der Industrieroboter (2) kann damit beliebige Prozesse an einem Werkstück ausführen. Beispielsweise können dies Montage-, Füge- oder Auftragprozesse sein. Der Industrieroboter (2) kann z.B. Stopfen in Öffnungen an einem Werkstück, insbesondere einer Fahrzeugkrosserie, setzen.

Der Industrieroboter (2) kann bei einem Störfall, z.B. einem Stromausfall oder einer anderen technischen Störung, stromlos geschaltet werden. Hierbei können alle mit elektrischem Strom betriebenen Achsantriebe blockiert werden. Im Störfall kann der Industrieroboter (2) eine starre Pose einnehmen. Andererseits sind Störfälle möglich, in denen der Industrieroboter (2) weiterhin in Bewegung ist.

Die Sicherheitseinrichtung (1) und das Sicherheitsverfahren haben die Ausbildung und Funktion, die Aufnahme (3) in einem Störfall zu de-arretieren und zusammen mit dem Industrieroboter (2) ausweichen zu lassen. Die Sicherheitseinrichtung (1) kann im Ausführungsbeispiel von Figur 1 bis 9 die Aufnahme (3) samt Industrieroboter (2) nach ihrer De-Arretierung aktiv aus der bisherigen Position, insbesondere einer Arbeitsposition (18), in eine Rückstellposition oder Rückzugposition (19) bewegen. Der Industrieroboter (2) kann dadurch von einem Werkstück und/oder einem Werker und von der Arbeitsposition (18) entfernt werden.

Die Sicherheitseinrichtung (1) kann alternativ oder zusätzlich die Aufnahme (3) samt Industrieroboter (2) nach ihrer De-Arretierung auf äußere Krafteinwirkung passiv ausweichen lassen. Ein Werker kann dadurch z.B. den Industrieroboter (2) wegdrücken. Figur 1 bis 9 zeigen beispielhaft die Variante einer zusätzlichen passiven Ausweichmöglichkeit. Das Ausführungsbeispiel von Figur 10 bis 18 zeigt ein rein passives Ausweichen.

Die Aufnahme (3) weist mehrere, insbesondere zwei, Bewegungsachsen (16,17) auf, um die sie beweglich und arretierbar ist. Die Zahl der Bewegungsachsen (16,17) kann auch größer als zwei sein. Die Bewegungsachsen (16,17) können als rotatorische und/oder translatorische Bewegungsachsen ausgebildet sein.

Die Sicherheitseinrichtung (1) weist mehrere Arretierungen (7, 13) auf. Die Zahl der Arretierungen (7,13) kann der Zahl der Bewegungsachsen (16,17) entsprechen. Für die Ausbildung, Anordnung und Funktion einer Arretierung (7,13) gibt es unterschiedliche Möglichkeiten. Die Sicherheitseinrichtung (1) kann gleiche oder unterschiedliche Arretierungen (7,13) aufweisen.

Eine Arretierung (7,13) kann formschlüssig und/oder kraftschlüssig wirken. Bevorzugt wird ein Formschluss, z.B. in Form einer mechanischen Verriegelung (20) oder einer Rasteinrichtung (21). Eine kraftschlüssige Arretierung (7,13) kann z.B. als Reibbremse ausgebildet sein. Die Arretierung (7,13) weist formschlüssig und/oder kraftschlüssig zusammenwirkende Arretiermittel (22,23), z.B. Riegelelemente, Rastmittel, Reibkörper oder dgl. auf.

Eine Arretierung (7,13) kann steuerbar sein und einen im Störfall betätigten Auslöser (8) aufweisen, der die Aufnahme (3) de-arretiert. Dies ist auf unterschiedliche Weise möglich. Die Arretierung (7,13) kann vorgespannt sein, wobei der Auslöser (8) gegen die Vorspannkraft wirkt. Die Vorspannung kann z.B. in Öffnungsrichtung wirken, wobei der Auslöser (8) die Arretierung (7,13) geschlossen hält und im Störfall freigibt. Alternativ kann die Vorspannung in Schließrichtung und als Haltekraft wirken, wobei der Auslöser (8) im Störfall die Arretierung (7,13) aktiv öffnet. Er kann hierfür einen Aktor und einen Antrieb aufweisen und die Vorspannung bzw. Haltekraft überwinden.

Eine Arretierung (7,13) kann andererseits selbsthaltend sein und eine bevorzugt einstellbare Haltekraft aufweisen, die z.B. durch eine Feder, einen Dauermagneten oder auf andere Weise aufgebracht wird. Die Arretierung (7,13) kann unter einer äußeren Krafteinwirkung und bei Überschreiten der Haltekraft oder Belastungsschwelle auslösen und die Aufnahme (3) de-arretieren. Die Haltekraft kann auf die im Prozess bestimmungsgemäß einwirkenden Kräfte abgestimmt werden und über diesem Kraftniveau liegen.

Bei einer Mehrfachanordnung von Arretierungen (7,13) kann deren Auslösung eigenständig und unabhängig voneinander erfolgen. Die dabei frei gegebenen Ausweichbewegungen können ebenfalls eigenständig und unabhängig voneinander sein.

Eine aktive Ausweichbewegung der Aufnahme (3) kann durch einen zur Sicherheitseinrichtung (1) gehörigen Energiespeicher (5) und einen davon angetriebenen Aktor, z.B. durch eine Feder, bewirkt werden. Der Energiespeicher (5) ist auch bei einer technischen Störung, z.B. einem Stromausfall, wirksam. Er kann redundant bzw. latent sein. Eine passive Ausweichbewegung der Aufnahme (3) kann durch eine von außen auf die Aufnahme (3) und/oder den Industrieroboter (2) einwirkende Kraft, z.B. durch einen Werker, bewirkt werden.

Im Störfall wird eine erste Arretierung (7) gelöst und eine aktive oder passive Rückstellbewegung der Aufnahme (3) in eine Rückzugposition (19) ermöglicht. Das Lösen der Arretierung (7) kann im Ausführungsbeispiel von Figur 1 bis 9 durch einen Auslöser (8) bewirkt werden.

Durch diese erste Ausweichbewegung, insbesondere die vorgenannte Rückstellbewegung, wird eine weitere Arretierung (13) gelöst und eine weitere passive oder aktive Ausweichbewegung der Aufnahme (3) ermöglicht.

Bei mehr als zwei Arretierungen (7,13) kann sich dies in Form einer mehrstufigen Auslösekaskade wiederholen.

Es kann unterschiedliche Arten von Störfällen geben. In einem Störfall kann z.B. die elektrische Stromversorgung für den Industrieroboter (2) und/oder die Sicherheitseinrichtung (1) ausfallen. Der Industrieroboter (2) kann hierbei die erwähnte starre Pose einnehmen, wobei die Sicherheitseinrichtung (1) und das Sicherheitsverfahren die vorgenannte Sicherheitskinematik auslösen.

In einem anderen Fall kann das Auftreten einer Störung durch eine Steuerung, z.B. eine Anlagensteuerung oder die Robotersteuerung, detektiert werden. Die Sicherheitseinrichtung (1) kann mit ihren steuerbaren Komponenten, insbesondere einem Auslöser (8), an diese Steuerung angeschlossen werden. Die besagte Steuerung kann die detektierte Störung nach Ursache, Relevanz und anderen Kriterien auswerten und eine geeignete Sicherheitsmaßnahme auslösen. Sie kann insbesondere die Sicherheitseinrichtung (1) in der nachfolgend beschriebenen Weise ansteuern.

In einem anderen Störfall kann es zur Kollision des Industrieroboters (2) mit einem unerwarteten Hindernis in seinem Arbeitsbereich kommen, wodurch eine äußere Krafteinwirkung auf die Aufnahme (3) und/oder den Industrieroboter (2) entsteht und eine Arretierung (7,13) deaktiviert. Das Hindernis kann z.B. eine Person oder ein Gegenstand sein.

Die Sicherheitseinrichtung (1) kann in unterschiedlicher Weise konstruktiv ausgebildet sein. Figur 1 bis 9 zeigen ein erstes Ausführungsbeispiel in verschiedenen Ansichten und Betriebsstellungen (18, 19). Die Sicherheitseinrichtung (1) weist eine Rückstelleinrichtung (4) mit einer Rückstellmechanik (6) auf, an der die Aufnahme (3) angeordnet ist. Die Aufnahme (3) kann in einer nicht dargestellten Ausführungsvariante starr an der Rückstellmechanik (6) angeordnet sein.

Die Rückstelleinrichtung (4) ist vorzugsweise gemäß Figur 1 bis 7 ortsfest und flurgebunden an der automatisierten Prozessumgebung und an einer Arbeitsstelle angeordnet. Sie kann alternativ hängend und an einem Portal oder dgl. angeordnet sein. Sie kann in weiterer Abwandlung gemäß Figur 10, 11, 19 und 20 beweglich, insbesondere fahrbar angeordnet sein. In der Ausführungsform von Figur 1 bis 9 ist die Rückstelleinrichtung (4) aktiv und in der Variante von Figur 10 bis 18 passiv.

Die Rückstellmechanik (6) kann in beliebiger Weise konstruktiv ausgebildet sein. Sie kann einteilig oder bevorzugt mehrteilig sein. Besonders geeignet ist eine in den Zeichnungen dargestellte Schlittenanordnung oder eine Schwingenanordnung.

Die in Figur 1 bis 9 gezeigte Rückstellmechanik (6) weist einen Träger (10) für die Aufnahme (3) auf, der z.B. als Schlitten ausgeführt ist. Der Träger (10) bzw. Schlitten ist mittels einer Führung (11), z.B. parallelen Führungsschienen, auf einer plattenförmigen und mit dem Untergrund verbundenen Basis (9) beweglich bzw. fahrbar gelagert.

Bei der nicht dargestellten Variante einer Schwingenanordnung ist z.B. der Träger (10) am freien Ende einer um eine Basis (9) mittels einer Drehführung (11) schwenkbaren Schwinge angeordnet.

Die Rückstellmechanik (6) weist eine Bewegungsachse (17) auf, die z.B. als die gezeigte lineare Schlittenachse oder als eine Drehachse einer Schwingenanordnung oder in anderer geeigneter Weise ausgebildet ist. Durch die Bewegungsachse (17) erfolgt eine aktive Rückstellbewegung und Verlagerung des Trägers (10) mitsamt der Aufnahme (3) und des Industrieroboters (2) aus der Ausgangs- oder Arbeitsposition (18) in eine Rückstellposition (19). Die Bewegungsachse (17) der Rückstellmechanik (6) ist zugleich eine Bewegungsachse der Aufnahme (3). Ihre Bewegungsrichtung ist durch einen Pfeil markiert.

In den gezeigten Ausführungsformen ist die Aufnahme (3) um eine Bewegungsachse (16) beweglich an der Rückstellmechanik (6), insbesondere an deren Träger (10), angeordnet und gelagert. Die Bewegungsachse (16) ist vorzugsweise als Drehachse ausgebildet. Diese hat bevorzugt eine aufrechte Lage und eine freie Beweglichkeit nach beiden Richtungen. Sie ist orthogonal zur Schlittenachse (17) ausgerichtet. Die gezeigte Lagerung (12) der Aufnahme (3) am Träger (10) ist als Drehlagerung ausgebildet.

In einer anderen Ausführungsform kann die Bewegungsachse (16) als Linearachse oder in anderer Weise ausgebildet sein. In einer weiteren Variante ist es möglich, dass die Aufnahme (3) um mehrere Bewegungsachsen beweglich an der Rückstellmechanik (6), insbesondere an deren Träger (10), angeordnet und gelagert ist.

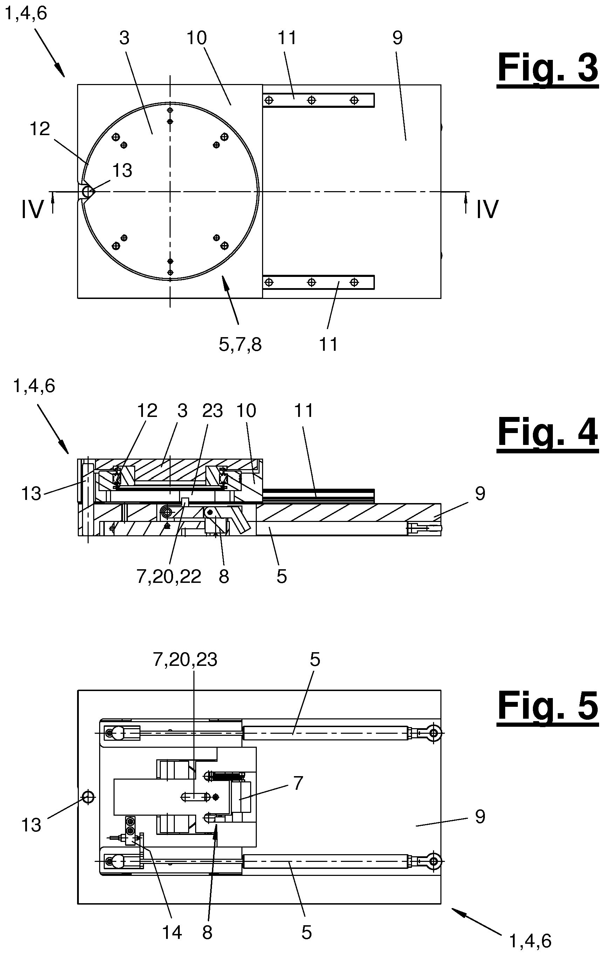

Die Aufnahme (3) kann in unterschiedlicher Weise konstruktiv ausgebildet sein. Vorzugsweise ist sie gemäß Figur 4 scheiben- oder tellerartig gestaltet. Der Industrieroboter (2) ist vorzugsweise stehend auf der Aufnahme (3) angeordnet und befestigt. Alternativ ist eine hängende und nach unten oder zur Seite gerichtete Roboteranordnung möglich. Der Industrieroboter (2) ist vorzugsweise mit seinem ersten Glied oder Basisglied und zentrisch an der Aufnahme (3) befestigt. Die z.B. rotatorische Bewegungsachse (16) kann sich durch das erste Glied oder Basisglied erstrecken. Die Befestigung kann lösbar sein und kann z.B. als Schraubverbindung ausgeführt sein.

Die aktive Rückstelleinrichtung (4) kann einen Energiespeicher (5) mit einem Aktor aufweisen. Dieser kann die Rückstellmechanik (6) beaufschlagen und die vorerwähnte aktive Rückstellbewegung bewirken. Figur 5 bis 9 zeigen diese Anordnung.

Der Energiespeicher (5) mit Aktor kann in unterschiedlicher Weise ausgebildet sein. Er kann z.B. als Kraftspeicher ausgeführt sein. Ein Kraftspeicher kann als komprimierbares elastisches Rückstellelement, insbesondere als Feder ausgeführt sein. Er kann mit oder ohne Dämpfung ausgebildet sein. In der bevorzugten und gezeigten Ausführungsform ist der Kraftspeicher als Gasfeder ausgebildet, die eine ggf. einstellbare Drosseleinrichtung für die Dämpfungswirkung aufweist.

Der Energiespeicher (5) kann in einer anderen und nicht dargestellten Ausführungsform aus einer elektrischen Batterie, einem fluidischen Druckspeicher oder dgl. bestehen und kann mittels eines geeigneten Aktors mit der Rückstellmechanik (6) in entsprechend geeigneter Weise wirkverbunden sein und diese antreiben. Ein Aktor kann eine Motorspindel, ein fluidischer Zylinder oder dgl. sein.

Die Sicherheitseinrichtung (1) weist eine der Rückstelleinrichtung (4), insbesondere der Rückstellmechanik (6), zugeordnete Arretierung (7) auf. Die Arretierung (7) kann mit einem im Störfall ansprechenden Auslöser (8) ausgerüstet oder verbunden sein.

Die Arretierung (7) ist vorzugsweise als formschlüssige Arretierung, insbesondere als mechanische Verriegelung (20), ausgeführt. Sie kann alternativ oder zusätzlich als kraftflüssige Arretierung ausgebildet sein. Wie Figur 4 im Schnitt verdeutlicht, ist die vorgespannte Arretierung (7) bzw. Verriegelung (20) z.B. als federbelastetes Lenkergetriebe, insbesondere Kniehebelgetriebe, mit einem Arretierzapfen als Arretierelement (22) ausgebildet, der in eine entsprechende Arretieröffnung (23) an der Unterseite des Trägers (10) formschlüssig und verriegelnd eingreift. Die Arretierung (7) kann ansonsten in beliebig anderer geeigneter Weise konstruktiv ausgebildet sein und funktionieren.

Die Arretierung (7) wirkt gegen den Energiespeicher (5) und den Aktor und hält den Träger (10) mit der Aufnahme (3) und dem Industrieroboter (2) in der Ausgangs- oder Arbeitsposition (18). Bei einer anderen Ausführungsform der Rückstellmechanik (6) z.B. einer Schwingenanordnung, kann die Arretierung (7) in anderer Weise ausgebildet sein. Bei einer Schwingenanordnung ist sie z.B. als Drehsperre an einem den Träger (10) tragenden Schwingenarm ausgebildet.

Der Auslöser (8) hält die Arretierung (7) in ihrer Arretierlage fest. Dies kann gegen eine rückstellende Kraft, z.B. eine Feder, der Arretierung (7) erfolgen. Der Auslöser (8) kann durch die besagte Steuerung oder durch die Störung selbst, insbesondere durch einen Stromausfall, betätigt werden. Er löst dabei die Arretierung (7), die ihrerseits die Rückstellmechanik (6), insbesondere den Träger (10), freigibt, die/der dann unter Einwirkung des Energiespeichers (5) und des Aktors in die Rückzugposition (19) bewegt werden kann.

Der Auslöser (8) kann in unterschiedlicher Weise ausgebildet sein. Vorzugsweise ist er als elektrisches Halteelement ausgebildet. Er kann hierbei z.B. als Elektromagnet oder als elektrisches Ventil ausgeführt sein. In dem gezeigten Ausführungsbeispiel fällt der als Elektromagnet ausgebildete Auslöser (8) im Störfall durch Ansteuerung oder durch Stromausfall ab und gibt die federbelastete Arretierung (7) frei. In der Variante als elektrisches Ventil wird die Energiezuführung zum Aktor für dessen Betätigung frei geschaltet.

Der Auslöser (8) ist in dem gezeigten Ausführungsbeispiel mit einem aktivierenden Schalter (14) verbunden. Dieser ist z.B. an der Basis (9) angeordnet und wird von der Rückstellmechanik (6) bei Verlassen der Ausgangs- oder Arbeitsposition (18) gelöst und bei Rückkehr in diese Position (18) wieder betätigt. Der Schalter (14) schaltet dadurch den Auslöser (8) erst wieder ein, wenn nach Behebung des Störfalls die Aufnahme (3) wieder in die Ausgangs- oder Arbeitsposition (18) bewegt wird. Er kann hierfür z.B. die Stromzufuhr zum Auslöser (8) beschalten.

Die Sicherheitseinrichtung (1) von Figur 1 bis 9 weist eine weitere Arretierung (13) für eine passive Ausweichbewegung der Aufnahme (3) auf. Diese ist z.B. zwischen der Aufnahme (3) und dem Träger (10) oder der Basis (9) angeordnet. Diese Arretierung (13) kann durch die erwähnte Rückstellbewegung des Trägers (10) und der Aufnahme (3) mitsamt Industrieroboter (2) selbsttätig gelöst werden. Die Arretierung (13) ist vorzugsweise formschlüssig und z.B. als mechanische Verriegelung (20) ausgebildet. Alternativ oder zusätzlich kann sie kraftschlüssig ausgeführt sein.

In dem gezeigten Ausführungsbeispiel werden die Arretierelemente (22,23) der Arretierung (13) von einem an der Basis (9) angeordneten Arretierzapfen (22) gebildet, der durch eine seitliche Ausnehmung im Träger (10) ragt und mit einer am Außenumfang der Aufnahme (3) angeordneten Arretierkerbe (23) formschlüssig zusammenwirkt. Die Arretierung (13) ist an der von der Bewegungsrichtung (17) abgewandten Seite der Aufnahme (3) angeordnet, wobei die Arretierkerbe (23) an der Aufnahme (3) und die Ausnehmung am Träger (10) in einer zur Bewegungsrichtung (17) entgegengesetzten Richtung offen sind. Bei der Rückstellbewegung entfernen sich der Träger (10) und die Aufnahme (3) vom basisfesten Arretierzapfen (22), wodurch die Arretierung (13) gelöst wird. Die Aufnahme (3) kann sich dann mit dem Industrieroboter (2) unter externer Krafteinwirkung frei drehen.

Die Rückzugposition (19) kann vorgegeben bzw. definiert sein. Sie kann bedarfsweise überfahren werden. Die Rückstelleinrichtung (4) und ihre Komponenten (5,6) sind hierfür entsprechend ausgebildet.

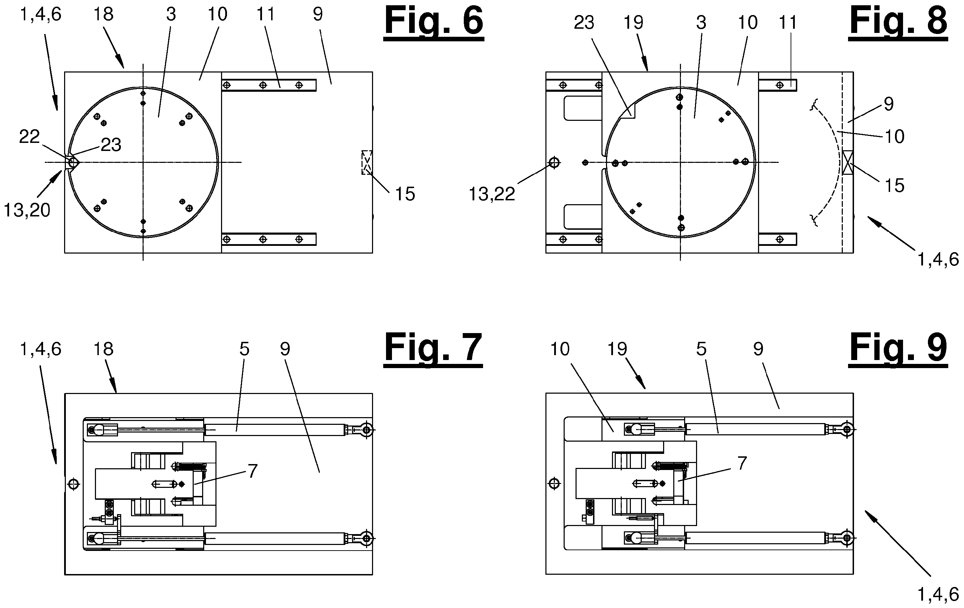

Ein Notschalter (15) kann das Überfahren detektieren und eine weiter gehende Sicherheitsmaßnahme auslösen. Er kann z.B. ein Abschalten der Fördereinrichtung für die Werkstücke oder der Fertigungsstrasse bewirken. Der Notschalter (15) ist z.B. gemäß Figur 6 und 8 an der Basis (9) und am Endbereich der Führung (11) angeordnet und wird vom Träger (10) betätigt.

Die Sicherheitseinrichtung (1) weist im Ausführungsbeispiel von Figur 10 bis 18 andere Ausführungsformen von Arretierungen (7,13) auf. Diese sind z.B. als Rasteinrichtungen (21) ausgebildet. Die Rasteinrichtungen (21) weisen formschlüssig zusammenwirkende Arretier- oder Rastelemente (22,23) auf, die z.B. paarweise angeordnet und als Kugel/Aufnahmeöffnung ausgebildet sind. Die Rasteinrichtung (21) kann eine Haltekraft aufweisen, die fest vorgegeben oder einstellbar sein kann. Die Haltekraft kann auf unterschiedliche Weise aufgebracht werden, z.B. durch eine Feder. Die Haltekraft hält die Arretierung (7,13) geschlossen.

Die Sicherheitseinrichtung (1) weist in diesem Ausführungsbeispiel eine passive Rückstelleinrichtung (4) ohne Energiespeicher (5) auf, die auf die besagte äußere Krafteinwirkung an der Aufnahme (3) und/oder am Industrieroboter (2) und eine De-Arretierung eine passive Ausweichbewegung ausführt. Die Rückstelleinrichtung (4) weist hierfür eine Rückstellmechanik (6) mit einer Bewegungsachse (17) auf, die wie im ersten Ausführungsbeispiel oder der dort genannten Varianten ausgebildet sein kann. Die Aufnahme (3) ist im zweiten Ausführungsbeispiel ebenfalls mittels einer Lagerung (12) drehbar um eine Bewegungs- oder Drehachse (16) an einem Träger (10), insbesondere einem Schlitten, gelagert.

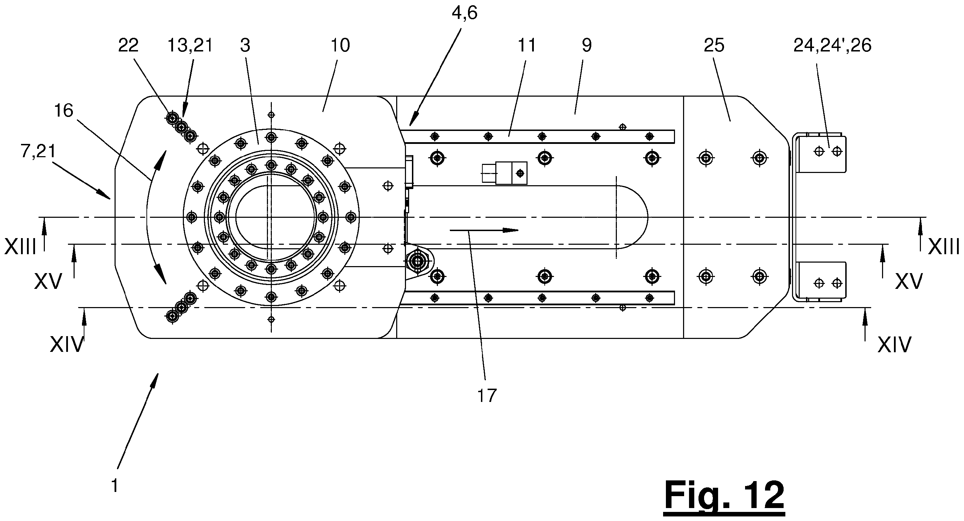

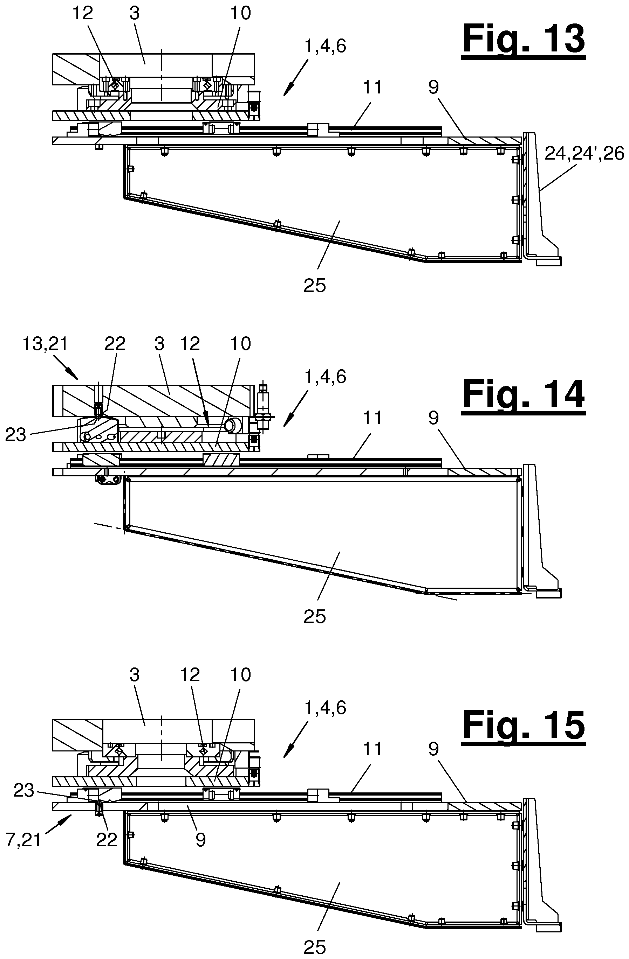

Die Arretierung (13) bzw. Rasteinrichtung (21) ist zwischen der Aufnahme (3) und dem Träger (10) angeordnet. Wie Figur 12 in der Draufsicht und Figur 14 in einem Längsschnitt gemäß Schnittlinie (XIV-XIV) verdeutlichen, kann die gegen eine Drehbewegung um die Drehachse (16) arretierende Rasteinrichtung (21) ein oder mehrere zusammenwirkende Rastelemente (22,23) aufweisen. In der gezeigten Ausführungsform sind mehrere, z.B. drei, Paarungen von Rastelementen (22,23) in einer Reihe hintereinander angeordnet. Diese bevorzugt gerade Reihenanordnung kann quer oder schräg zur Drehrichtung, insbesondere radial zur Drehachse (16), ausgerichtet sein.

Die Rasteinrichtung (21) kann eine oder bevorzugt mehrere Reihenanordnungen aufweisen.

In der gezeigten Ausführungsform befinden sich die Kugeln (22) in einem nach unten offenen Führungskanal an der Unterseite der tellerartigen Aufnahme (3). Sie werden von oben durch eine im Kanal befindliche Druckfeder und eine Stellschraube beaufschlagt. Die Aufnahmeöffnungen (23) sind an der Oberseite des Trägers (10) angeordnet. Sie befinden sich z.B. an einem leistenartigen Trägersockel.

Die Arretierung (7) bzw. Rasteinrichtung (21) arretiert die Aufnahme (3) um die z.B. translatorische Bewegungsachse (17). Sie ist zwischen dem Träger (10) und einem relativ ortsfesten Untergrund, insbesondere der Basis (9), angeordnet. Figur 15 zeigt diese Anordnung in einem Längsschnitt gemäß Schnittlinie (XV-XV) von Figur 12. Die Rasteinrichtung (21) besteht ebenfalls aus einer Reihe von Paarungen von Rastelementen (22,23). Die Reihe ist quer zur Bewegungsachse bzw. Bewegungsrichtung (17) ausgerichtet. Die Rastelemente (22), insbesondere Kugeln, befinden sich an der Oberseite der Basis (9) und sind jeweils in einem querenden Kanal mit Federbelastung unter Einwirkung einer Stellschraube angeordnet. Die korrespondierenden Rastelemente (23) bzw. Aufnahmeöffnungen befinden sich an der Unterseite des Trägers (10), vorzugsweise Schlittens.

Die Arretierungen (7,13) bzw. ihre Reihenanordnungen von Rastelement-Paarungen (22,23) sind quer oder schräg zueinander ausgerichtet. Ihre Auslösung kann von der Richtung der äußeren Krafteinwirkung abhängen. Die Arretierwirkung bzw. der Lösewiderstand gegen eine im Wesentlichen quer zur Reihe gerichtete äußere Kraft ist kleiner als gegen eine im Wesentlichen längs zur Reihe gerichtete Kraft.

Alternativ oder zusätzlich kann bei den Arretierungen (7,13) bzw. ihren Rasteinrichtungen (21) die Zahl der Reihenanordnungen

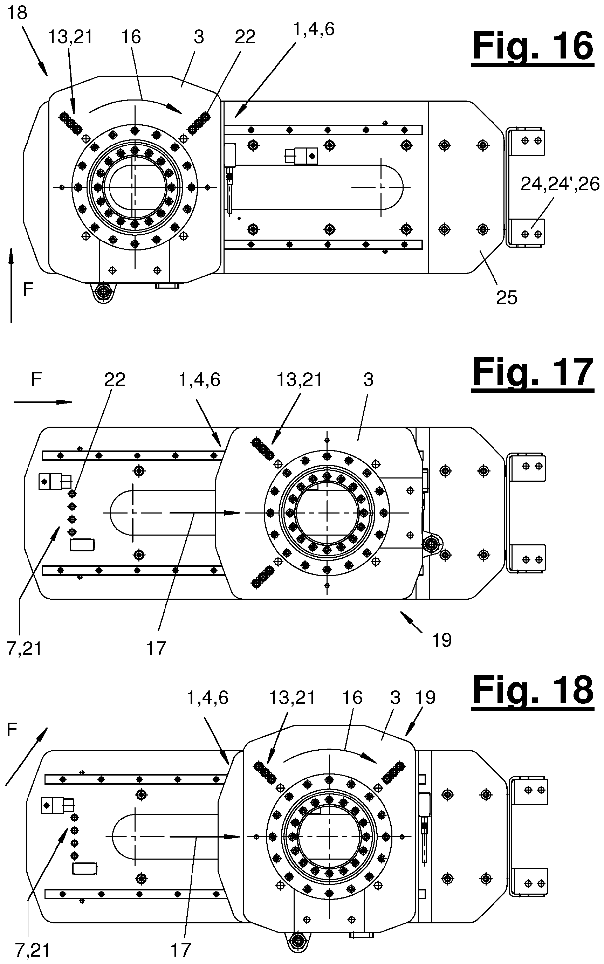

Figur 16 bis 18 verdeutlichen verschiedene Stellungen der Aufnahme (3) und der Arretierungen (7, 13), wobei eine äußere auslösende bzw. de-arretierende Kraft F schematisch mit einem Pfeil angedeutet ist.

In Figur 16 sind eine ausgelöste Arretierung (13) und eine Verdrehung der Aufnahme (3) um die Drehachse (16) dargestellt. Die Arretierung (7) ist geschlossen, so dass sich die Aufnahme (3) noch an der Arbeitsposition (18) befindet und dort drehend ausweicht. Die äußere Krafteinwirkung F kann hierfür z.B. tangential zur Drehachse (16) und quer zur Bewegungsachse (17) gerichtet sein.

Figur 17 verdeutlicht den Fall einer längs der Bewegungsachse (17) gerichteten äußeren Kraft F, wodurch die Arretierung (7) auslöst und die Arretierung (13) geschlossen bleibt. Die de-arretierte Aufnahme (3) behält ihre Drehstellung um die Achse (16) und bewegt sich um die Bewegungsachse (17) aus der Arbeitsposition (18) in die Rückstellposition (19).

Im Fall der Figur 18 und einer schrägen äußeren Krafteinwirkung F lösen beide Arretierungen (7,13) aus, wobei sich die de-arretierte Aufnahme (3) um die Achse (16) dreht und sich außerdem um die Bewegungsachse (17) aus der Arbeitsposition (18) in die Rückstellposition (19) bewegt.

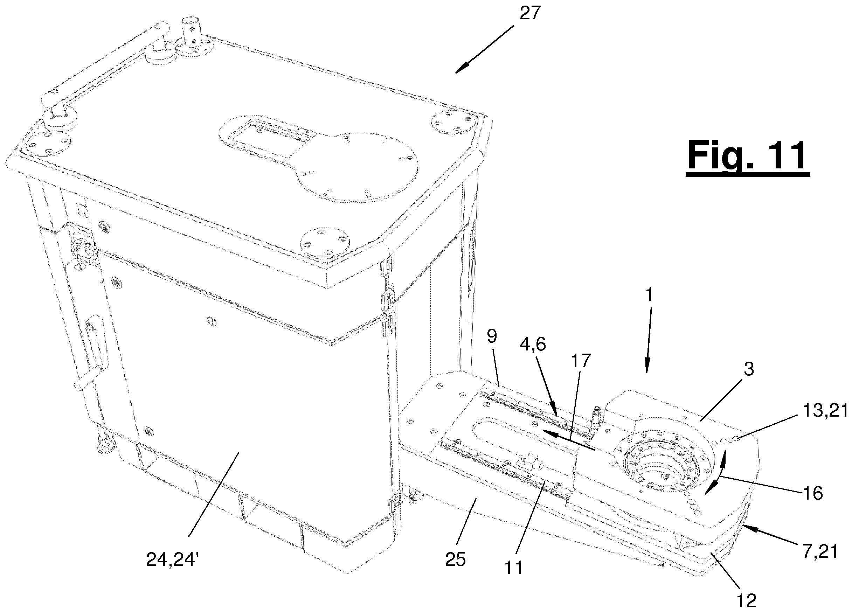

Figur 10 und 11 verdeutlichen eine besondere Anordnung der Sicherheitseinrichtung (1) von Figur 12 bis 15. Alternativ kann die Sicherheitseinrichtung (1) auch in anderer Weise, insbesondere nach dem Ausführungsbeispiel von Figur 1 bis 9 ausgebildet sein.

Die Sicherheitseinrichtung (1) einschließlich des Industrieroboters (2) kann sich an einem Transportmittel (24) befinden und kann mit diesem zu einer Arbeitsstelle bewegt werden. Figur 10 bis 18 und Figur 19 zeigen hierfür verschiedene Varianten.

Das Transportmittel (24) ist in der Variante von Figur 10 bis 18 z.B. als am Untergrund oder in anderer Weise rollfähiger Transportwagen (24') ausgebildet. Das Transportmittel (24), insbesondere der Transportwagen (24'), kann ein Fahrwerk oder Laufwerk und ein Gehäuse aufweisen, welches eine Energieversorgung, z.B. eine Batterie, Werkzeuge etc. und ggf. auch eine Robotersteuerung aufnehmen kann. Auf der Gehäuseoberseite kann eine Arbeitsfläche ausgebildet sein.

Die Sicherheitseinrichtung (1) ist mit ihrer Basis (9) an einem z.B. horizontal vom Gehäuse abstehenden Tragarm (25) oder sonstigen Träger angeordnet, der mittels einer Stelleinrichtung (26) am Transportmittel (24), insbesondere Transportwagen (24'), verstellbar, insbesondere höhenverstellbar, angeordnet ist. Hierdurch lässt sich der Industrieroboter (2) in unterschiedlichen Höhenlagen an der Arbeitsstelle positionieren. Alternativ oder zusätzlich ist eine rotatorische oder auch eine mehrachsige Verstellung eines Tragarm (25) möglich.

Die Sicherheitseinrichtung (1) kann alternativ oder zusätzlich auch auf der erwähnten Arbeitsoberfläche des Gehäuses angeordnet sein. In der gezeigten Ausführungsform ist hier eine vorbereitete Aufnahme für die stationäre Anordnung des Industrieroboters (2) angeordnet. Der Träger (25) ist als quer von der Gehäuseseitenwand abstehender Tragarm ausgebildet. Er kann bei Nichtgebrauch eingeschwenkt bzw. hochgeklappt werden.

Die Sicherheitseinrichtung (1) und der mit einem ggf. wechselbaren Prozesswerkzeug bestückte Industrieroboter (2) sowie das Transportmittel (24) können eine mobile Prozesseinrichtung (27) bilden, die an einer Arbeitsstelle temporär oder dauerhaft positioniert werden kann. Bei einer alternativen stationären Prozesseinrichtung (27) kann ein stationärer Träger für die Sicherheitseinrichtung (1) vorhanden sein oder letztere an einer vorhandenen Struktur ortsfest angeordnet werden.

Figur 19 und 20 zeigen Varianten der vorbeschriebenen Ausführungsformen. Die Rückstelleinrichtung (4) kann hierbei die gleiche wie in den vorherigen Ausführungsformen sein.

Figur 19 zeigt in einer Draufsicht eine Variante des Transportmittels (24), die als Zustelleinrichtung (24") ausgebildet ist. Die Zustelleinrichtung (24") ist bevorzugt stationär auf dem Untergrund angeordnet und weist eine zusätzliche Achse (29) auf, mit der die Aufnahme (3) mit dem (nicht dargestellten) Industrieroboter (2), insbesondere die vorbeschriebene Rückstelleinrichtung (4), an die Arbeitsposition (18) zugestellt werden kann. Die Arbeitsposition (18) und der Zustellweg können bedarfsweise variieren.

Hierdurch können sich weitere Vorteile ergeben. Z.B. kann bei einer festen Anordnung der Aufnahme (3) oder der Rückstelleinrichtung (4) ein Reichweiten- und Störproblem auftreten, wenn verschieden breite Fahrzeuge bearbeitet werden sollen. Durch eine Beweglichkeit/Verfahrbarkeit der Aufnahme (3)/Rückstelleinrichtung (4) mittels der Zustelleinrichtung (24") kann das Reichweitenproblem behoben und ein optimales Erreichen verschiedener Arbeitspositionen (18) ermöglicht werden. Andererseits kann durch ein Zurückfahren sichergestellt werden, dass einzelne Teile der Aufnahme (3)/Rückstelleinrichtung (4) bedarfsweise aus dem Bearbeitungsbereich bzw. Durchfahrbereich der Fahrzeuge entfernt werden können und die Störkonturen optimal an die aktuelle Fahrzeugbreite anpassbar sind.

Um die Aufnahme (3)/Rückstelleinrichtung (4) beweglich bzw. verfahrbar auszugestalten, sind verschiedene Ausführungen der Zustelleinrichtung (24") möglich. Beispielsweise kann die Basis (9) einer Rückstelleinrichtung (4) gemäß Figur 1 bis 9 auf der zusätzlichen Achse (29), insbesondere einer Linearachse, bevorzugt einer NC-Achse angeordnet sein. Die Linearachse kann z.B. als Schlittenanordnung analog der vorbeschriebenen Rückstellmechanik (6) ausgebildet sein.

Die Zustelleinrichtung (24"), insbesondere die zusätzliche Achse (29), kann gesteuert werden, z.B. von einer externen Steuerung, insbesondere einer Anlagensteuerung oder der Robotersteuerung. Hierdurch ist eine reproduzierbare und/oder definierbare Positionsansteuerung für die Aufnahme (3)/Rückstelleinrichtung (4) bzw. den darauf angeordneten Industrieroboter (2) möglich.

Alternativ sind eine rotatorische Kinematik der zusätzlichen Achse (29) und/oder auch eine Mehrachsigkeit der Zustelleinrichtung (24") möglich.

Die Aufnahme (3)/Rückstelleinrichtung (4) kann über die Basis der zusätzlichen Achse (29) hinausragen und kann als eine Art Ausleger auf der zusätzlichen Achse (29) angeordnet werden. Hierdurch wird der Bearbeitungsbereich erhöht, wobei aber durch eine geeignete Gestaltung, bei zurückgefahrener Aufnahme (3)/Rückstelleinrichtung (4) keine Teile der zusätzlichen Achse (29) oder der Aufnahme (3)/Rückstelleinrichtung (4) in einem Durchfahrbereich der Fahrzeuge angeordnet sind.

Als weitere Ausführungsform wäre denkbar, die bereits vorhandenen Führungen 11 als Führungen der Zustelleinrichtung (24") zu verwenden, indem die wesentlichen Bestandteile der Rückstelleinrichtung (4), insbesondere der Träger (10), auf diesen Führungen (11) verfahrbar angeordnet sind. Z.B. könnte der Energiespeicher (5) mit einer Spindel und einem daran befindlichen Motor (30) verbunden sein, wobei dieser Motor (30) bearbeitungsabseitig angeordnet ist. Der Energiespeicher (5) ist beweglich an den Führungen (11) angeordnet und direkt oder indirekt mit der Aufnahme (3) bzw. dem Träger (10) verbunden, sodass durch eine Bewegung des Energiespeichers (5) ebenso wesentliche Bestandteile der Rückstelleinrichtung (4) bewegt werden können und somit eine Beweglichkeit/Verfahrbarkeit des Industrieroboters (2) ermöglicht wird. In Figur 20 ist eine solche Ausführung angedeutet.

Als weitere Ausführungsform wäre denkbar den Energiespeicher (5) bzw. vor oder nachgelagerte Elemente längenveränderlich auszugestalten.

Figur 20 verdeutlicht auch die vorgenannte Ausbildung der Aufnahme (3) mit einem seitlich abstehenden Ausleger (28). Der Industrieroboter (2) kann stationär am distalen Endbereich des Auslegers (28) angeordnet sein. Eine Bewegungsachse (16) mit Lagerung (12) kann zwischen dem Träger (10) und dem rückwärtigen Endbereich des Auslegers (28) angeordnet sein. Die Bewegungsachse (16) kann z.B. eine quer zur Ausleger-Längsachse ausgerichtete Drehachse sein. In weiterer Abwandlung kann der Industrieroboter (2) um eine weitere Bewegungsachse, insbesondere Drehachse, ausweichfähig mit dem Ausleger (28) verbunden sein. Die vorbeschriebenen Arretierungen können entsprechend angeordnet und angepasst werden.

Durch den Ausleger (28) kann ebenfalls sichergestellt werden, dass keine Elemente in dem Durchfahrbereich des Werkstücks, insbesondere der Karosserie, angeordnet werden müssen. Ein Ausleger kann in den verschiedenen Varianten außerdem darunter liegende Anlagenteile oder Störkonturen übergreifen.

In Abwandlung von Figur 20 kann ein Ausleger (28) auch stationär oder an einer Rückstelleinrichtung (4) gemäß Figur 1 bis 9 angeordnet sein.

Um weitere MRK-Fähigkeiten zu bieten, wäre es denkbar, die Rückstelleinrichtung (4), Teile davon und/oder den Ausleger (28) mit einer Sensorik zu versehen.

Des Weiteren kann die Aufnahme (3), insbesondere der Ausleger (28), eine vertikale Beweglichkeit zur Höhenverstellung des Industrieroboters (2) haben und entsprechend ausgestaltet sein."

Abwandlungen der gezeigten und beschrieben Ausführungsformen und der vorgenannten Varianten sind in verschiedener Weise möglich, solange sie im Rahmen des Schutzbereichs der Ansprüche bleiben.

Die Ausweichbewegung um die drehende Bewegungsachse (16) kann ebenfalls aktiv sein und durch einen Energiespeicher mit Aktor bewirkt werden. Dieser ist z.B. zwischen der Aufnahme (3) und dem Träger (10) angeordnet und kann z.B. als Drehfeder ausgebildet sein. Die Kinematiken oder Richtungen der Bewegungsachsen (16,17) können variieren. Sie können gegenüber den gezeigten Ausführungsbeispielen vertauscht werden. Sie können auch untereinander gleich sein, z.B. in Form eines Kreuzschlittens.

Die konstruktive Ausbildung und Kinematik der Aufnahme (3) und der Rückstelleinrichtung (4), insbesondere der Rückstellmechanik (6) und des Energiespeichers (5) mit Aktor, können abgewandelt werden. Die Arretierungen (7,13) können konstruktiv variiert und anders angeordnet werden.

### BEZUGSZEICHENLISTE

- 1: Sicherheitseinrichtung
- 2: Industrieroboter
- 3: Aufnahme, Roboteraufnahme
- 4: Rückstelleinrichtung
- 5: Energiespeicher mit Aktor, Kraftspeicher
- 6: Rückstellmechanik
- 7: Arretierung
- 8: Auslöser, Elektromagnet
- 9: Basis
- 10: Träger, Schlitten
- 11: Führung
- 12: Lagerung
- 13: Arretierung
- 14: Schalter
- 15: Notschalter
- 16: Bewegungsachse, Drehachse
- 17: Bewegungsachse, Bewegungsrichtung, Schlittenachse
- 18: Arbeitsposition
- 19: Rückstellposition, Rückzugposition
- 20: mechanische Verriegelung
- 21: Rasteinrichtung
- 22: Arretierelement, Rastelement, Kugel, Zapfen
- 23: Arretierelement, Rastelement, Öffnung, Kerbe
- 24: Transportmittel
- 24': Transportwagen
- 24": Zustellvorrichtung
- 25: Tragarm
- 26: Stelleinrichtung
- 27: Prozesseinrichtung
- 28: Ausleger
- 29: Achse zusätzlich, Linearachse
- 30: Motor

## Patentansprüche

1. Sicherheitseinrichtung für einen Industrieroboter (2), wobei die Sicherheitseinrichtung (1) eine Aufnahme (3) für den Industrieroboter (2) aufweist, die um eine Bewegungsachse (16,17) beweglich und arretierbar ist, wobei die Sicherheitseinrichtung (1) dazu vorgesehen und ausgebildet ist, die Aufnahme (3) in einem Störfall zu de-arretieren und zusammen mit dem Industrieroboter (2) ausweichen zu lassen, **dadurch gekennzeichnet, dass** durch eine Ausweichbewegung, insbesondere Rückstellbewegung, der Aufnahme (3) eine weitere Arretierung (13) für eine weitere, insbesondere passive, Ausweichbewegung der Aufnahme (3) gelöst wird.

2. Sicherheitseinrichtung nach Anspruch 1, **dadurch gekennzeichnet, dass** die Aufnahme (3) um mehrere, insbesondere zwei, Bewegungsachsen (16,17) ausweichfähig beweglich und arretierbar ist.

3. Sicherheitseinrichtung nach Anspruch 1 oder 2, **dadurch gekennzeichnet , dass** die Sicherheitseinrichtung (1) die Aufnahme (3) nach De-Arretierung an einer Arbeitsposition (18) um eine Bewegungsachse (16) drehend ausweichen lässt.

4. Sicherheitseinrichtung nach Anspruch 1, 2 oder 3, **dadurch gekennzeichnet, dass** die Sicherheitseinrichtung (1) die Aufnahme (3) nach De-Arretierung aus einer Arbeitsposition (18) um eine Bewegungsachse (17) in eine distanzierte Rückstellposition (19) bewegt.

5. Sicherheitseinrichtung nach einem der vorhergehenden Ansprüche, **dadurch gekennzeichnet, dass** die Rückstellposition (19) definiert und bedarfsweise überfahrbar ist, wobei ein Notschalter (15) das Überfahren detektiert und eine weitergehende Sicherheitsmaßnahme auslöst.

6. Sicherheitseinrichtung nach einem der vorhergehenden Ansprüche, **dadurch gekennzeichnet, dass** eine formschlüssige Arretierung (7,13) als mechanische Verriegelung (20) oder als Rasteinrichtung (21) ausgebildet ist.

7. Sicherheitseinrichtung nach Anspruch 6, **dadurch gekennzeichnet, dass** die Rasteinrichtung (21) eine Reihenanordnung von mehreren Rastelementen (22,23) aufweist.

8. Sicherheitseinrichtung nach einem der vorhergehenden Ansprüche, **dadurch gekennzeichnet, dass** eine steuerbare Arretierung (7,13) einen im Störfall betätigten Auslöser (8) aufweist.

9. Sicherheitseinrichtung nach einem der vorhergehenden Ansprüche, **dadurch gekennzeichnet, dass** die Sicherheitseinrichtung (1) eine Rückstelleinrichtung (4) mit einer Rückstellmechanik (6) aufweist, die um eine Bewegungsachse (16,17) ausweichfähig ist.

10. Sicherheitseinrichtung nach Anspruch 8, **dadurch gekennzeichnet, dass** der Auslöser (8) als elektrisches Halteelement, insbesondere Elektromagnet oder elektrisches Ventil, ausgebildet ist.

11. Sicherheitseinrichtung nach Anspruch 9, **dadurch gekennzeichnet, dass** die Rückstellmechanik (6) als Schlittenanordnung oder als Schwingenanordnung ausgebildet ist.

12. Sicherheitseinrichtung nach einem der vorhergehenden Ansprüche, **dadurch gekennzeichnet, dass** die Sicherheitseinrichtung (1) einen Industrieroboter (2) beinhaltet.

13. Prozesseinrichtung mit einem Industrieroboter (2) nebst Prozesswerkzeug und einer Sicherheitseinrichtung (1), **dadurch gekennzeichnet, dass** die Sicherheitseinrichtung (1) nach einem der Ansprüche 1 bis 12 ausgebildet ist.

14. Prozesseinrichtung nach Anspruch 13, **dadurch gekennzeichnet, dass** die Sicherheitseinrichtung (1) mit dem Industrieroboter (2) an einem Transportmittel (24), insbesondere einem Transportwagen (24') oder einer Zustellvorrichtung (24"), angeordnet ist.

15. Sicherheitsverfahren für einen Industrieroboter (2), wobei eine Sicherheitseinrichtung (1) eine Aufnahme (3) für den Industrieroboter (2) aufweist, die um eine Bewegungsachse (16,17) beweglich ist und arretiert wird, wobei die Aufnahme (3) in einem Störfall de-arretiert wird und zusammen mit dem Industrieroboter (2) ausweicht, **dadurch gekennzeichnet, dass** durch eine Ausweichbewegung, insbesondere Rückstellbewegung, der Aufnahme (3) eine weitere Arretierung (13) für eine weitere, insbesondere passive, Ausweichbewegung der Aufnahme (3) gelöst wird.

## Claims

1. Safety device for an industrial robot (2), wherein the safety device (1) has a receptacle (3) for the industrial robot (2), which is movable and lockable about a movement axis (16, 17), wherein the safety device (1) being provided and designed for unlocking the receptacle (3) and evading together with the industrial robot (2) in the event of a fault, **characterized in that** a further locking device (13) for a further, in particular passive, evading movement of the receptacle (3) is released by a evading movement, in particular a reset movement, of the receptacle (3).

2. Safety device according to claim 1, **characterized in that** the receptacle (3) is movable and lockable so as to be capable of evading about a plurality of, in particular two, movement axis (16, 17).

3. Safety device according to claim 1 or 2, **characterized in that** the safety device (1) allows the receptacle (3), after unlocking from a working position (18), to be evaded in rotation about a movement axis (16).

4. Safety device according to claim 1, 2 or 3, **characterized in that** the safety device (1) moves the receptacle (3), after unlocking from a working position (18), about a movement axis (17) into a distanced reset position (19).

5. Safety device according to one of the preceding claims, **characterized in that** the reset position (19) is defined and can be passed over as required, wherein an emergency switch (15) detects the passing over and triggers a further safety measure.

6. Safety device in accordance with one of the preceding claims, **characterized in that** a form-fit locking device (7, 13) is designed as a mechanical locking device (20) or as a detent device (21).

7. Safety device according to Claim 6, **characterized in that** the detent device (21) has a row arrangement of a plurality of detent elements (22, 23).

8. Safety device in accordance with one of the preceding claims, **characterized in that** a controllable locking device (7, 13) has a trigger (8) which is actuated in the event of a fault.

9. Safety device in accordance with one of the preceding claims, **characterized in that** the safety device (1) has a reset device (4) with a reset mechanism (6) which can be evaded about a movement axis (16, 17).

10. Safety device according to claim 8, **characterized in that** the trigger (8) is designed as an electrical holding element, in particular an electromagnet or electrical valve.

11. Safety device according to claim 9, **characterized in that** the reset mechanism (6) is designed as a carriage arrangement or as a lever arrangement.

12. Safety device in accordance with one of the preceding requirements, **characterized in that** the safety device (1) contains an industrial robot (2).

13. Process device having an industrial robot (2) together with a process tool and a safety device (1), **characterized in that** the safety device (1) is designed in accordance with one of claims 1 to 12.

14. Process device according to claim 13, **characterized in that** the safety device (1) with the industrial robot (2) is arranged on a transport means (24), in particular a transport carriage (24') or a delivery device (24").

15. Safety method for an industrial robot (2), wherein a safety device (1) has a receptacle (3) for the industrial robot (2), which receptacle is movable about a movement axis (16, 17) and is locked, wherein the receptacle (3) being unlocked and evades together with the industrial robot (2) in the event of a fault, **characterized in that** a further locking device (13) for a further, in particular passive, evasive movement of the receptacle (3) is released by an evasive movement, in particular reset movement, of the receptacle (3).

## Revendications

1. Dispositif de sécurité pour un robot industriel (2), dans lequel le dispositif de sécurité (1) comporte un logement (3) pour le robot industriel (2), qui est mobile et verrouillable autour d'un axe de déplacement (16, 17), le dispositif de sécurité (1) étant prévu et conçu pour déverrouiller le réceptacle (3) et s'échapper avec le robot industriel (2) en cas de défaut, **caractérisé en ce qu'**un autre dispositif de verrouillage (13) pour un autre mouvement d'évitement, en particulier passif, du réceptacle (3) est libéré par un mouvement d'évitement, en particulier un mouvement de réarmement, du réceptacle (3).

2. Dispositif de sécurité selon la revendication 1, **caractérisé en ce que** le réceptacle (3) est mobile et verrouillable de manière à pouvoir se soustraire à plusieurs axes de déplacement (16, 17), en particulier deux.

3. Dispositif de sécurité selon la revendication 1 ou 2, **caractérisé en ce que** le dispositif de sécurité (1) permet, après déverrouillage d'une position de travail (18), de contourner le réceptacle (3) en rotation autour d'un axe de déplacement (16).

4. Dispositif de sécurité selon la revendication 1, 2 ou 3, **caractérisé en ce que** le dispositif de sécurité (1) déplace le réceptacle (3), après déverrouillage d'une position de travail (18), autour d'un axe de déplacement (17) dans une position de réarmement (19) distante.

5. Dispositif de sécurité selon l'une des revendications précédentes, **caractérisé en ce que** la position de réarmement (19) est définie et peut être dépassée selon les besoins, un interrupteur de secours (15) détectant le passage et déclenchant une autre mesure de sécurité.

6. Dispositif de sécurité selon l'une des revendications précédentes, **caractérisé en ce qu'**un dispositif de verrouillage (7, 13) de forme est conçu comme dispositif de verrouillage mécanique (20) ou comme dispositif d'encliquetage (21).

7. Dispositif de sécurité selon la revendication 6, **caractérisé en ce que** le dispositif d'encliquetage (21) présente un agencement en rangée de plusieurs éléments d'encliquetage (22, 23).

8. Dispositif de sécurité selon l'une des revendications précédentes, **caractérisé en ce qu'**un dispositif de verrouillage commandable (7, 13) comporte une gâchette (8) qui est actionnée en cas de défaut.

9. Dispositif de sécurité selon l'une des revendications précédentes, **caractérisé en ce que** le dispositif de sécurité (1) présente un dispositif de réarmement (4) avec un mécanisme de réarmement (6) qui peut être contourné autour d'un axe de déplacement (16, 17).

10. Dispositif de sécurité selon la revendication 8, **caractérisé en ce que** la gâchette (8) est conçue comme un élément de maintien électrique, en particulier un électroaimant ou une vanne électrique.

11. Dispositif de sécurité selon la revendication 9, **caractérisé en ce que** le mécanisme de réarmement (6) est conçu sous la forme d'un agencement de chariot ou de levier.

12. Dispositif de sécurité selon l'une des exigences précédentes, **caractérisé en ce que** le dispositif de sécurité (1) contient un robot industriel (2).

13. Dispositif de traitement comportant un robot industriel (2) avec un outil de traitement et un dispositif de sécurité (1), **caractérisé en ce que** le dispositif de sécurité (1) est conçu selon l'une des revendications 1 à 12.

14. Dispositif de traitement selon la revendication 13, **caractérisé en ce que** le dispositif de sécurité (1) avec le robot industriel (2) est disposé sur un moyen de transport (24), en particulier un chariot de transport (24') ou un dispositif de sortie (24").

15. Procédé de sécurité pour un robot industriel (2), dans lequel un dispositif de sécurité (1) comporte un réceptacle (3) pour le robot industriel (2), lequel réceptacle est mobile autour d'un axe de déplacement (16, 17) et est verrouillé, le réceptacle (3) étant déverrouillé et s'évade avec le robot industriel (2) en cas de défaut, **caractérisé en ce que** un dispositif de verrouillage (13) pour un autre déplacement, en particulier passif, du réceptacle (3) est déclenché par un mouvement évasif, notamment le déplacement de réarmement, du réceptacle (3).
